# EUROPEAN PATENT APPLICATION

(11) **EP 2 500 632 A1**
(43) Date of publication of application: **19.09.2012**
(21) Application number: 10839072.5
(22) Date of filing: 01.11.2010
(51) Int. Cl.: F21V 8/00, F21S 2/00, F21Y 101/02

(54) **LIGHT GUIDING BODY, LIGHT GUIDING UNIT, LIGHT GUIDING PACKAGE, LIGHTING DEVICE, AND DISPLAY DEVICE**

(30) Priority: 23.12.2009 JP 2009291531
(71) Applicant: Sharp Kabushiki Kaisha, Osaka-shi, Osaka 545-8522 (JP)
(72) Inventor: TANAKA Atsuyuki, Osaka-shi, Osaka 545 8522 (JP); YAMAMOTO Tomohiko, Osaka-shi, Osaka 545 8522 (JP)
(74) Representative: Müller-Boré & Partner Patentanwälte
(86) International application number: PCT/JP2010/069399
(87) International publication number: WO 2011/077836

(57) **Abstract**

In the present invention, a light guide member is provided that can locally control the amount of planar backlight and that is suitable for a thin illumination device. In the light guide member (11), a tubular portion (12) includes a recess (DH) that tapers inward from a top surface (12U) and a constriction line (LN) that is recessed inward from a side surface (12S) and that is along a tube axis direction. A wall portion (13) that is connected to the light guide member (11) and that extends in a direction intersecting the tube axis direction includes, on a side wall (13S), a rough surface (RS) for changing the light within the wall portion such that an optical path becomes suitable for emission to the outside.

## Description

### Technical Field

The present invention relates to a light guide member that guides received light, a light guide unit in which a plurality of light guide members are aligned in a line, a light guide package in which a light guide unit and a light source are packaged, an illumination device that includes a light guide package and a display device that incorporates an illumination device.

### Background Art

A liquid crystal display device (display device) that incorporates a non-self-luminous liquid crystal display panel (display panel) generally incorporates a backlight unit (illumination device) that supplies light to the liquid crystal display panel. The backlight unit preferably produces planar light that is spread over the entire region of the planar liquid crystal display panel. Hence, the backlight unit may include a light guide member for mixing, to a high degree, the light of light sources (for example, self-luminous elements such as LEDs) incorporated.

For example, a backlight unit disclosed in patent document 1 has a structure shown in Fig. 11. In the backlight unit 149 of Fig. 11, a plurality of LEDs 132 are arranged in a line on a mounting substrate 131, and a plurality of light guide bars 111 are so arranged in a line as to correspond individually to the LEDs 132. In each of the light guide bars 111, the received light is reflected multiple times and thereby guided to a top surface 112U thereof, and is emitted to the outside. The emitted light is mixed, and thus planar light (backlight) is produced.

If lighting control can be performed on the backlight unit 149 on the individual LED 132 basis, it is possible to partially illuminate the liquid crystal display panel with light corresponding to the shape of the light guide bars 111. The backlight unit 149 having the function described above can partially illuminate the liquid crystal display panel according to an image displayed on a liquid crystal display panel, and thereby reduces power consumption.

### Related Art Document

### Patent Document

Patent document 1: JP-A-2007-227074

### Disclosure of the Invention

### Problems to be Solved by the Invention

However, in the backlight unit 149 disclosed in patent document 1, even if the lighting control is performed on the individual LED 132 basis, the liquid crystal display panel can be partially illuminated only with the light corresponding to the shape of the light guide bars 111 receiving the light from the LEDs 132. In other words, the backlight unit 149 cannot partially illuminate the liquid crystal display panel with planar light whose area is smaller than that of the top surface 112U of the light guide bar 111 (in short, the backlight unit 149 cannot locally control the amount of planar backlight).

The backlight unit 149 produces planar light with light from the top surfaces 112U of the light guide bars 111 arranged directly below the liquid crystal display panel. Even though the light emitted from the top surfaces 112U of the light guide bars 111 is diffused, the light is not mixed until the light reaches a level somewhat higher than the top surfaces 112U. In this way, it is impossible to illuminate the liquid crystal display panel with high-quality planar light.

The present invention is made in view of the conditions described above. A main object of the present invention is to provide a light guide member that can locally control the amount of planar backlight and that is suitable for a thin illumination device.

### Means for Solving the Problem

A light guide member that guides received light therewithin includes: a tubular portion that receives light; and a wall portion that is connected to the tubular portion and that extends in a direction intersecting a tube axis direction. The tubular portion of the light guide member includes a recess that tapers inward from a top surface thereof and a constriction line that is recessed inward from a side surface thereof and that is along the tube axis direction. The wall portion includes, on a side wall, an optical path change processed surface for changing the light within the light guide member such that an optical path becomes suitable for emission to an outside.

In the configuration described above, when the light enters the tubular portion through a bottom surface thereof, the light first travels in a direction intersecting the bottom surface. The light reaches the surface of the recess that is excavated in the top surface facing the bottom surface of the tubular portion. The recess becomes thinner as it extends toward the bottom surface of the tubular portion. Hence, the incident angle of the light with respect to the surface of the recess is relatively increased, and thus the light is more likely to be totally reflected.

The light totally reflected off the recess travels in such a direction that the light diverges from the recess. The light can also reach the side surface of the tubular portion. In the side surface, a tapered groove is formed by the constriction line along the tube axis direction. Hence, the light travelling from the interior of the tubular portion toward the side surface is incident at a relatively large angle on the side surface, and thus is more likely to be totally reflected.

Since the light totally reflected off the side surface of the tubular portion travels in such a direction that the light diverges from the tubular portion, the light is more likely to reach the wall portion. On the side wall of the wall portion, an optical path change processed surface is formed, and the light within the light guide member is changed such that the optical path becomes suitable for emission to the outside (in short, the light within the light guide member is more likely to be incident at an angle less than the critical angle on the optical path change processed surface). In other words, a large amount of light is more likely to be emitted to the outside from the side surface of the wall portion. Hence, the light from the light guide member is radiated from the light guide member.

When the light guide members as described above are arranged closely to each other, the light from the light guide members 11 is mixed to a high degree, and thereby is formed into planar light. Hence, an illumination device including a plurality of the guide members described above supplies the planar light of high quality. Moreover, the planar light whose main component is not light from the top surfaces of the light guide members is produced from the light from the side wall of the wall portion. Hence, a given distance from the top surface is not needed to produce the planar light. Therefore, although the illumination device including a plurality of the guide members described above is thin, it is possible to obtain the planar light of high quality. Consequently, the light guide member described above is suitable for the illumination device that is needed to supply the planar light of high quality.

The entrance of the recess in the light guide member is preferably shaped such that a longitudinal direction of the entrance faces the constriction line.

In the configuration described above, the surfaces of the recess, especially the surface facing the wall portion is so inclined as to rise up from the bottom surface of the tubular portion. Hence, the light that enters the tubular portion and that travels so as to intersect the tube axis direction is more likely to be totally reflected from the surface of the recess and is more likely to travel toward the wall portion.

A large number of shapes of the recess are possible; the recess is preferably conical, pyramidal, circular truncated cone-shaped or prismoidal.

The side surface of the tubular portion extending from the constriction line to the wall portion preferably has at least a curved portion.

With the configuration described above, it is possible to control the light that might be emitted from the side surface of the tubular portion if the surface is flat. In other words, when part of the side surface on which the incident angle of the light is less than the critical angle is curved, it is possible to change the incident angle of the light and guide the light to the wall portion.

When the entire side surface of the tubular portion extending from the constriction line to the wall portion is curved, a part of the side surface of the tubular portion extending from the constriction line to the wall portion that is close to the constriction line is preferably greater in curvature than a part thereof that is close to the wall portion.

In the configuration described above, the part of the side surface close to the constriction line can totally reflect the light rather than being a portion that does not totally reflect the light from the recess and let the light pass through it (the part of the side surface far away from the constriction line which is a portion that receives the light from the recess at such an angle as to totally reflect the light easily because it is far away from the recess may have a relatively small curvature).

Preferably, the tubular portion is shaped such that, in a cross section intersecting its axial direction, that is, the tube axis direction, the tubular portion is formed by combining two ellipses, and a focal point of one ellipse coincides with a focal point of the other ellipse.

In the configuration described above, when the light receiving point of the tubular portion coincides with one focal point included in the portion where the two ellipses overlaps each other, the light is more likely to pass through the vicinity of the other focal points of the ellipses. Hence, the light is more likely to effectively travel toward the wall portion.

A portion of the tubular portion that receives the light is preferably an excavation portion that is excavated inward from a bottom surface of the tubular portion.

The excavation portion described above can easily be aligned with the light source. It is more preferable that the excavation portion tapers inward from the bottom surface.

In the configuration described above, when the recess is arranged above the excavation portion, since the light is refracted off the surface of the tapered excavation portion to approach along the surface of the recess, the incident angle of the light that reaches the side surface of the recess is more likely to be relatively increased. Hence, it is more likely that the light is totally reflected off the surface of the recess and is made to travel toward the wall portion.

Preferably, a spring-up processed surface that guides the light so as to spring the light up is formed on the bottom wall of the wall portion, and a lens that diffuses and emits the light is formed on the top wall of the wall portion.

In the configuration described above, part of the light that is incident on the wall portion, that does not reach the side wall and that reaches the bottom wall is guided so as to be sprung up by the spring-up processed surface, and thus it is more likely to travel toward the top wall of the wall portion. Then, the sprung-up light is diffused and emitted to the outside by the lens arranged on the top wall of the wall portion. Hence, the light of the light guide member is reliably and more likely to be spread in such a direction that the light diverges from the tube axis direction.

A light guide unit in which a plurality of the guide members described above are aligned in a line is also included in the present invention. Furthermore, a light guide package including the light guide unit and a light source that supplies light to the light guide unit is also included in the present invention.

A light emitting element could be the light source. In the light guide package, in order to produce white light, the light emitting element preferably includes a blue light emitting chip or an ultraviolet light emitting chip and a fluorescent member that receives light from the light emitting chip to emit yellow light by fluorescence.

In order to produce white light, the light emitting element may include a blue light emitting chip and a fluorescent member that receives light from the light emitting chip to emit green light and red light by fluorescence.

In order to produce white light, the light emitting element may include a red light emitting chip, a blue light emitting chip and a fluorescent member that receives light from the blue light emitting chip to emit green light by fluorescence.

In order to produce white light, the light emitting element may include a red light emitting chip, a green light emitting chip and a blue light emitting chip.

An illumination device including the light guide package described above is also included in the present invention. A display device including the illumination device and a display panel that receives light from the illumination device is also included in the present invention.

### Advantages of the Invention

In the light guide member of the present invention, received light is radiated from the light guide member to the outside. Hence, when the light guide members described above are arranged closely to each other, the light from the light guide members is mixed to a high degree and is formed into planar light. In producing the planar light, the light from the side walls of the side portions of the light guide members is not surpassed by the light from the top surfaces thereof. Hence, a given distance from the top surface is not needed to produce the planar light. Therefore, although the illumination device including a plurality of the guide members described above is thin, it is possible to obtain the planar light of high quality (the light guide member described above is suitable for the illumination device that is needed to supply the planar light of high quality).

### Brief Description of Drawings

[Fig. 1] A perspective view of a light guide package and a mounting substrate;
[Fig. 2A] A cross-sectional view taken along line A-A' of the light guide package and the mounting substrate shown in Fig. 1, that is seen in the direction of arrows and that is an optical path diagram;
[Fig. 2B] A cross-sectional view taken along line B-B' of the light guide package and the mounting substrate shown in Fig. 1, that is seen in the direction of arrows and that is an optical path diagram;
[Fig. 3] A cross-sectional view of the light guide package that has the same cross-sectional direction as Fig. 2B and that is an optical path diagram;
[Fig. 4A] A cross-sectional view of the light guide package and the mounting substrate that has the same cross-sectional direction as Fig. 2A and that is an optical path diagram;
[Fig. 4B] A cross-sectional view of the light guide package and the mounting substrate that has the same cross-sectional direction as Fig. 2B and that is an optical path diagram;
[Fig. 5A] A cross-sectional view of the light guide package and the mounting substrate that has the same cross-sectional direction as Fig. 2A and that is an optical path diagram;
[Fig. 5B] A cross-sectional view of the light guide package and the mounting substrate that has the same cross-sectional direction as Fig. 2B and that is an optical path diagram;
[Fig. 6A] A cross-sectional view of the light guide package with an excavation portion, and the mounting substrate that has the same cross-sectional direction as Fig. 2A and that is an optical path diagram;
[Fig.6B] A diagram showing another example of Fig. 6A;
[Fig. 7] A perspective view of the light guide package and the mounting substrate;
[Fig. 8A] A cross-sectional view taken along line A-A' of the light guide package and the mounting substrate shown in Fig. 7, that is seen in the direction of arrows and that is an optical path diagram;
[Fig. 8B] A cross-sectional view taken along line B-B' of the light guide package and the mounting substrate shown in Fig. 7, that is seen in the direction of arrows and that is an optical path diagram;
[Fig. 9A] A cross-sectional view taken along line A-A' of the light guide package and the mounting substrate shown in Fig. 7, that is seen in the direction of arrows and that is an optical path diagram;
[Fig. 9B] A cross-sectional view taken along line B-B' of the light guide package and the mounting substrate shown in Fig. 7, that is seen in the direction of arrows and that is an optical path diagram;
[Fig. 10] An exploded perspective view of a liquid crystal display device; and

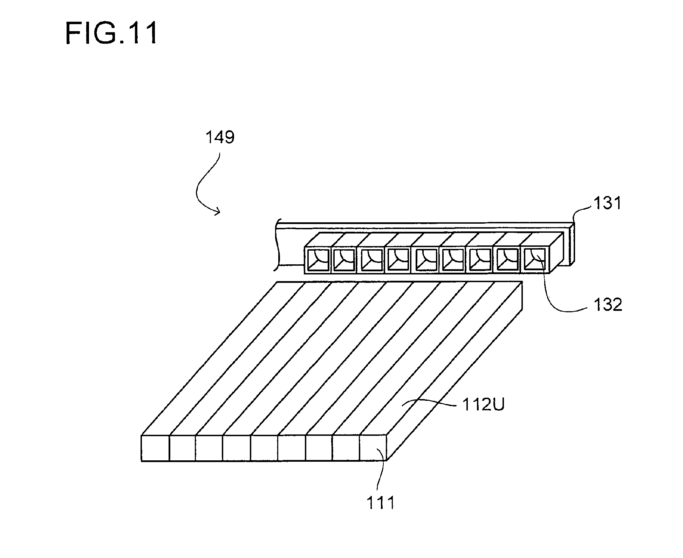

[Fig. 11] A perspective view of a conventional backlight unit.

### Best Mode for Carrying Out the Invention

### [First embodiment]

A first embodiment will be described below with reference to accompanying drawings. For convenience, member symbols and the like may be omitted; in this case, other drawings should be referenced. For convenience, an area that is not shown as a cross section may be hatched. A black dot shown together with arrows means a direction perpendicular to the plane of the figure. An alternate long and short dashed line with an arrow means light.

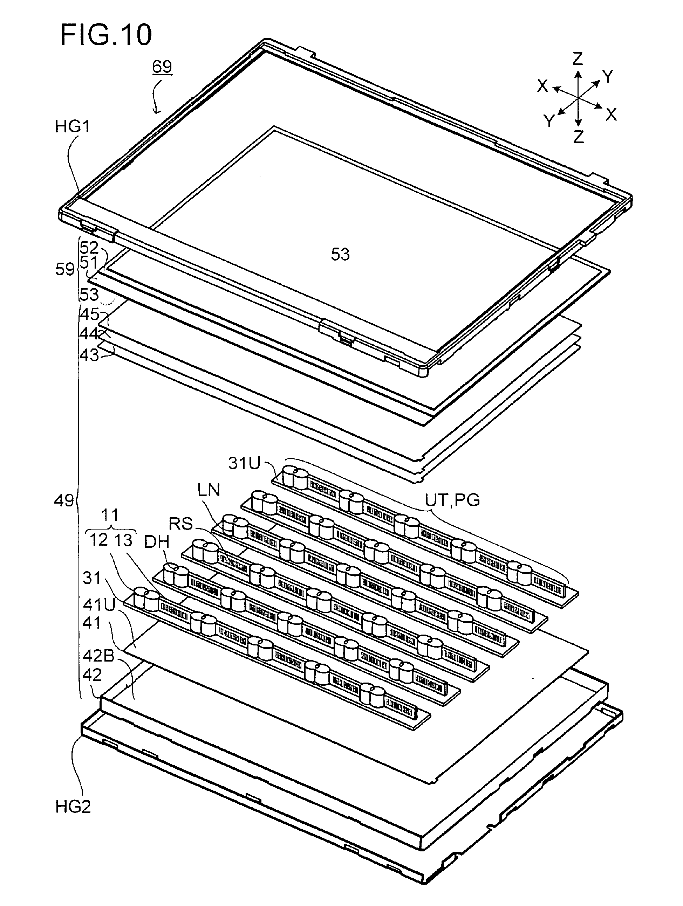

Fig. 10 is an exploded perspective view showing a liquid crystal display device 69. As shown in Fig. 10, the liquid crystal display device 69 includes a liquid crystal display panel (display panel) 59, a backlight unit (illumination device) 49 that supplies light to the liquid crystal display panel 59 and a housing HG (which is composed of a front housing HG1 and a back housing HG2) that sandwiches these components.

In the liquid crystal display panel 59, an active matrix substrate 51 that includes switching elements such as thin film transistors (TFTs) and an opposite substrate 52 opposite the active matrix substrate 51 are adhered with a sealant (not shown). Liquid crystal (not shown) is injected into a gap between both subtracts 51 and 52.

A polarization film is attached to the light receiving surface side of the active matrix substrate 51 and the emission side of the opposite substrate 52. In the liquid crystal display panel 59 configured as described above, variations in transmittance resulting from the inclination of the liquid crystal molecules are utilized for displaying an image.

The backlight unit 49 arranged directly below the liquid crystal display panel 59 will now be described. The backlight unit 49 includes mounting substrates 31, light guide packages PG, a reflective sheet 41, a backlight chassis 42, a diffusion plate 43, a prism sheet 44 and a lens sheet 45.

The mounting substrate 31 is rectangular; a plurality of electrodes (not shown) are aligned on the mounting substrate 31. A plurality of mounting substrates 31 are aligned in a direction (Y direction) that perpendicularly intersects a direction (X direction) in which the mounting substrates 31 extend. The electrode attached to the mounting substrate 31 is a power supply terminal for a light source (light emitting element) such as a light emitting diode (LED) 32, which will be described later. A direction that perpendicularly intersects the X direction in which the mounting substrates 31 extend and the Y direction in which the mounting substrates 31 are aligned is referred to as a Z direction.

On the mounting surface 31U of the mounting substrate 31, a resist film (not shown) that serves as a protective film may be formed. Preferably the resist film has reflective color such as white, although it should not be deemed a limitation. This is because, even if light is incident on the resist film, the light is reflected off the resist film toward the outside, and thus variations in the amount of light due to the absorption of light by the mounting substrate 31 become less significant.

The light guide package PG includes the LEDs 32 and light guide members 11. The LED 32 is mounted on the electrode formed on the mounting substrate 31, and thus receives the supply of current to emit light. In order to ensure the sufficient amount of light, a plurality of LEDs ("self-luminous elements" or "point light sources") 32 are preferably mounted on the mounting substrate 31. For convenience, only part of LEDs 32 are shown in the figure.

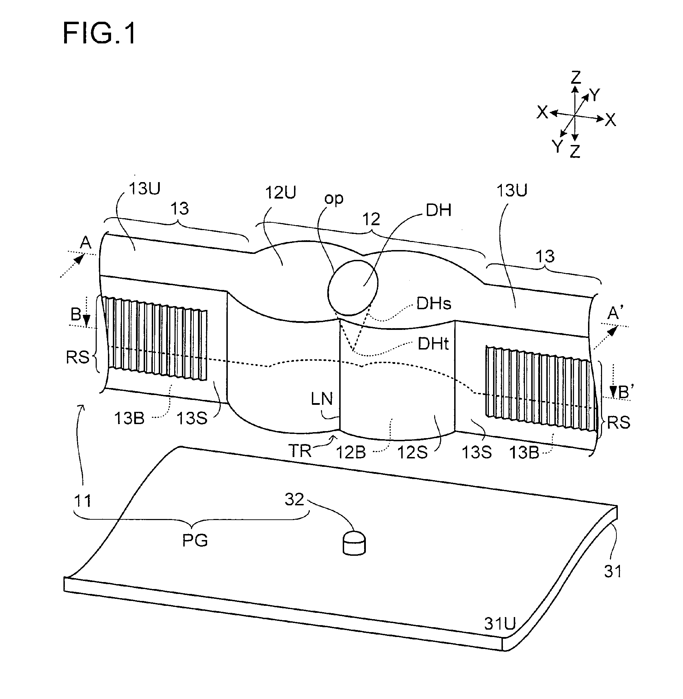

A plurality of light guide members 11 are aligned in one direction to form a light guide unit UT (see Fig. 10). An enlarged view of the light guide member 11 is shown in Fig. 1. As shown in Fig. 1, the light guide member 11 includes a tubular portion 12 that receives light from the LED 32 and a wall portion 13 that is connected to the tubular portion 12 and that extends in a direction (for example, the X direction) intersecting a tube axis direction (the same direction as the Z direction). Both the tubular portion 12 and the wall portion 13 are formed of a transparent resin (for example, an acrylic resin or a polycarbonate) such that light can be reflected and made to travel therewithin.

The tubular portion 12 is a portion that receives light, and has such a shape that two tubes flank with each other and are combined together. The tubular portion 12 includes a constriction line LN that is recessed inward from a side surface 12S and that is along the tube axis direction. The tubular portion 12 includes, for example, around the center of the top surface 12U, a recess DH that tapers inward from the top surface 12U. The tubular portion 12 uses the side surface 12S having the constriction line LN, and the recess DH, to guide the received light in various directions (the details of which will be described later).

The wall portion 13 is a plate-shaped member, and is also a portion that receives the light guided by the tubular portion 12 and that emits the light to the outside. The wall portion 13 is connected to the tubular portion 12, and extends in a direction intersecting (such as a direction perpendicular to) the tube axis direction. Specifically, in the wall portion 13, the bottom wall 13B thereof is flush with the bottom surface 12B of the tubular portion 12, and the top wall 13U thereof is flush with the top surface 12U of the tubular portion 12. The wall portion 13 extends, from the side surface 12S of the tubular portion 12, especially from part of the side surface 12S around both ends in the direction in which the tubes are aligned, in the direction of the alignment (a direction intersecting the tube axis direction, such as a direction perpendicular thereto).

The wall portion 13 has, on its side wall 13S, a rough surface (refraction angle change surface) RS that changes the refraction angle of the light traveling. As an example of the rough surface RS, as shown in Fig. 1, there is a prism-processed surface RS in which triangular prisms are aligned in the X direction on the side wall 135. The rough surface RS can receive light at an angle less than the critical angle of the light guide member 11, and consequently, the light is emitted to the outside.

A plurality of light guide members 11 that emit the light as described above are aligned in a line to form the light guide unit UT. A plurality of light guide units UT are aligned as shown in Fig. 10. In this way, light emitted from the light guide members 11, that is, light emitted from the light guide unit UT, is mixed with light emitted from the adjacent light guide units UT, with the result that planar light is formed.

The reflective sheet 41 is an optical member that is arranged directly below a group of mounting substrates 31 which are parallel to each other. In the reflective sheet 41, the reflective surface 41U is faced to the mounting substrates 31, and thus part of the light emitted from the light guide units that does not travel toward the diffusion plate 43 and that travels toward the mounting substrates 31 is reflected and guided to the diffusion plate 43.

The backlight chassis 42 is a member that is formed in the shape of a box, as shown in Fig. 10, providing accommodation of the reflective sheet 41 placed on its bottom surface 42B, and accommodation of the mounting substrates 31, on which the light guide packages PG are arranged, placed over the reflective sheet 41.

The diffusion plate 43 is an optical sheet that is placed on the light guide packages PG, and diffuses light emitted from the light guide packages PG. The diffusion plate 43 diffuses planar light (in short, the light from the light guide packages PG) that is formed by overlapping the light from the light guide packages PG, and spreads the light over the entire region of the liquid crystal display panel 59.

The prism sheet 44 is an optical sheet that is placed on the diffusion plate 43. In the prism sheet 44, for example, triangular prisms extending (linearly) in one direction are disposed in parallel to each other within the plane of the sheet in one direction of intersection. In this way, the prism sheet 44 changes the characteristic of radiation of light from the diffusion plate 43.

The lens sheet 45 is an optical sheet that is placed on the prism sheet 44. In the lens sheet 45, minute particles for refracting and scattering light are dispersed therewithin. In this way, the lens sheet 45 prevents the light from the prism sheet 44 from being locally collected, and reduces the contrast (variations in the amount of light).

In the backlight unit 49 configured as described above, the light from the light guide packages PG is overlapped to form the planar light, and the planar light is passed through a plurality of optical members 43 to 55 and is supplied to the liquid crystal display panel 59. In this way, the non-self-luminous liquid crystal display panel 59 receives the light (backlight) from the backlight unit 49 and enhances the display function.

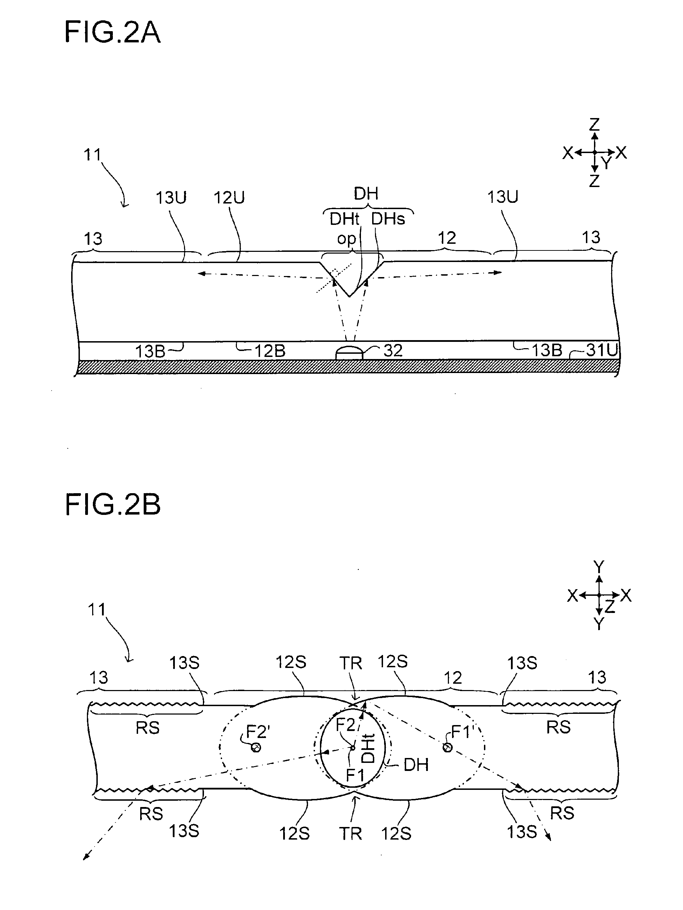

The light guide package PG will be described in detail. As shown in Fig. 1, the light guide member 11 included in the light guide package PG has the tubular portion 12 and the wall portion 13. The LED 32 is arranged to face the bottom surface 12B of the tubular portion 12. Hence, as shown in Fig. 2A (a cross-sectional view taken along line A-A' of the light guide package PG and the mounting substrate 31 shown in Fig. 1 and that is seen in the direction of arrows), the light enters the tubular portion 12 through the bottom surface 12B.

When the light from the LED 32 enters the tubular portion 12 through the bottom surface 12B, part of the light that is indicated by alternate long and short dashed lines with arrows is refracted and made to travel with respect to the bottom surface 12B so as to diverge from the axis of emission of the light of the LED 32 (the axis of emission of the light of the LED 32 intersects the bottom surface 12B of the tubular portion 12, for example, the axis is perpendicular thereto).

If the light receiving point of the tubular portion 12 that first receives the light from the LED 32 aligns with the tip DHt of the recess DH, most of the light travelling from the light receiving point reaches the surface DHs of the recess DH (in short, the light from the light receiving point travels in a direction intersecting the bottom surface 12B of the tubular portion 12, and reaches the surface DHs of the recess DH that covers the light receiving point).

The recess DH tapers toward the bottom surface 12B of the tubular portion 12. Hence, as shown in Fig. 2A, the incident angle of the light with respect to the surface DHs of the recess DH is relatively large and the light is more likely to be totally reflected. The light that has been totally reflected off the recess DH travels in such a direction that the light diverges from the recess DH. Such light can also reach the side surface 12S of the tubular portion 12 as shown in Fig. 2B (a cross-sectional view taken along line B-B' of the light guide package PG shown in Fig. 1 and that is seen in the direction of arrows).

The side surface 12S includes the constriction line LN that is along the tube axis direction. Hence, a groove TR that tapers is formed in the side surface 12S. Thus, the side surface 12S is a curved surface that is recessed toward the constriction line LN.

As shown in Fig. 2B, the light travelling from the interior of the tubular portion 12 is incident at a relatively large angle on a curved surface that is part of the side surface 12S close to the constriction line LN (as compared with a case where the light is incident on a planar side surface along an X-Z plane specified by the X direction and the Z direction, the incident angle is more likely to be increased when the light is incident on the curved surface that is part of the side surface 12S close to the constriction line LN).

Since the light that has been totally reflected off the side surface 12S travels in such a direction that the light diverges from the tubular portion 12, the light is more likely to reach the wall portion 13. Since the rough surface RS like the prism-processed surface is formed on the side wall 13S of the wall portion 13, the optical path of the light travelling within the wall portion 13 is changed by the rough surface RS to an optical path suitable for emission to the outside (in short, the light within the light guide member 11 is more likely to be incident at an angle less than the critical angle on the rough surface RS).

The light travelling within the wall portion 13 is more likely to travel, through the rough surface RS of the side surface 12S, toward the outside in various directions. In other words, the light from the light guide member 11 including the tubular portion 12 and the wall portion 13 is radiated from the light guide member 11.

When the light guide members 11 are arranged closely to each other, for example, when a plurality of light guide members 11 are aligned as in the light guide unit UT, the light from the light guide members 11 is mixed to a high degree, and thereby is formed into planar light. A plurality of light guide units UT are aligned, and thus the light from the light guide units UT is mixed, with the result that planar light of a large area and high quality is produced. In other words, the backlight unit 49 in which a plurality of light guide packages PG including the light guide units UT and the LEDs 32 are arranged closely to each other supplies the backlight (planar light) of high quality to the liquid crystal display panel 59.

The planar light whose main component is not light from the top surface 12U of the light guide member 11 is produced from the light from the side walls 13S. Hence, a given distance from the top surface 12U is not needed to produce the planar light. Therefore, although the backlight unit 49 including a plurality of light guide members 11 is thin, it is possible to obtain the planar light of high quality.

Lighting control is performed individually on the LEDs 32 of the light guide packages PG. Hence, the backlight unit 49 including a plurality of light guide packages PG can perform local diming control (can locally control the amount of planar backlight). The maximum value of the amount of light that is emitted as the backlight unit 49 can be changed by the number of light guide packages PG.

When only one light guide plate is used, it is necessary to change a manufacturing mold according to the area of the display of the liquid crystal display panel 59 whereas, when the light guide units UT are used, the number of light guide units UT is changed without any change in the manufacturing mold, and thus it is possible to cope with variations in the area of the display of the liquid crystal display panel 59. Hence, the light guide unit UT is inexpensive in terms of the cost. Moreover, the light guide unit UT can be suitable for various types.

The entrance op (in short, the opening surface produced in the top surface 12U of the tubular portion 12) of the recess DH in the light guide member 11 is preferably shaped such that the longitudinal direction thereof corresponds to the constriction line LN. For example, preferably, as shown in Fig. 2B, the entrance op is elliptical, and the direction of the major axis of the ellipse (the longitudinal direction of the ellipse) is along a direction (the same direction as the Y direction) obtained by connecting the opposite constriction lines LN.

When the entrance op described above is formed, and thus the distance from the entrance op to the bottom (the tip of the recess DH) of the recess DH is constant, the surfaces of the recess DH, especially the surface facing the wall portion 13 is so inclined as to rise up from the bottom surface 12B of the tubular portion 12. In this way, the light that enters the tubular portion 12 and that travels so as to intersect the tube axis direction is more likely to be incident at a relatively large angle on the surface of the recess DH, and thus is more likely to be totally reflected. Consequently, as shown in Fig. 2A, it is more likely that the light is totally reflected off the surface DHs of the recess DH and travels toward the wall portion 13.

When the side surface 12S extending from the constriction line LN to the wall portion 13 is curved as shown in Fig. 2B, the tubular portion 12 is preferably shaped such that, in a cross-sectional direction intersecting the tube axis direction (an X-Y plane direction perpendicular to the Z direction that is the tube axis direction, that is, a plane direction specified by the X direction and the Y direction), the tubular portion 12 is formed by combining the two ellipses (see alternate long and two short dashes lines). In particular, preferably, as shown in Fig. 2B, the directions of the major axes of the ellipses coincide with each other, and the focal point F1 of one ellipse coincides with the focal point F2 of the other ellipse (the other focal point corresponding to the focal point F1 is represented by F1', and the other focal point corresponding to the focal point F2 is represented by F2').

With respect to the light guide member 11 shown in Fig. 2B, in the tubular portion 12 formed by combining the two ellipses, the focal point F1 of one ellipse coincides with the focal point F2 of the other ellipse, and furthermore, the tip of the recess DH aligns with the focal points F1 and F2 along the tube axis direction (in short, the focal points F1 and F2 coincide with each other in the tube axis direction passing through the tip DHt of the recess DH).

In the light guide member 11 described above, the light receiving point of the tubular portion 12 coincides with the focal points F1 and F2 included in the portion where the two ellipses overlaps each other, and the light is more likely to pass through the vicinity of the other focal points F1' and F2' of the ellipses. Hence, the light is more likely to effectively travel toward the wall portion 13.

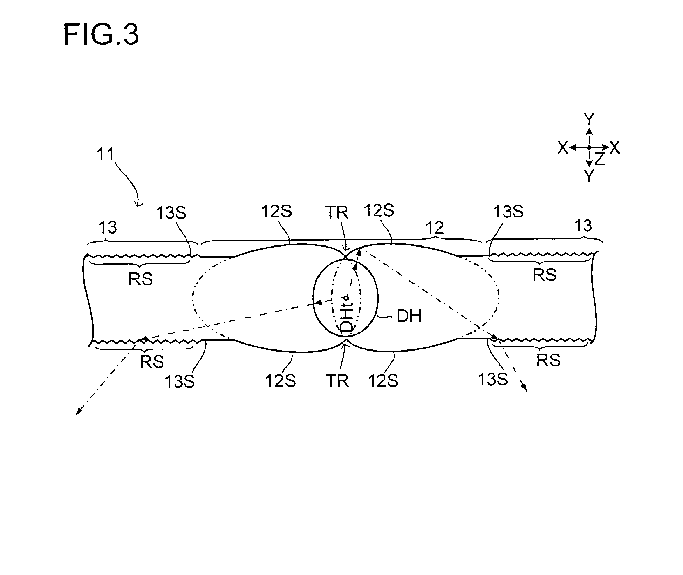

A tubular portion 12 shown in the cross-sectional view of Fig. 3, other than that shown in Fig. 2B, may be used (the cross-sectional direction of Fig. 3 is the same as Fig. 2B). Specifically, preferably, in the cross-sectional direction intersecting the tube axis direction, the tubular portion 12 is shaped such that two egg shapes are combined, and a thicker end of one egg shape is connected to a thicker end of the other egg shape (see alternate long and two short dashes lines).

When they are connected as described above, a part of the side surface 12S extending from the constriction line LN to the wall portion 13 that is close to the constriction line LN is greater in curvature than the part of the side surface 12S that is close to the wall portion 13. When the curved surface having such curvatures is the side surface 12S, the part of the side surface 12S close to the constriction line LN can totally reflect the light without being a portion that does not totally reflect the light from the recess DH and let the light easily pass through it.

By contrast, the part of the side surface 12S far away from the constriction line LN which is a portion that receives the light from the recess DH at such an angle as to totally reflect the light easily because it is far away from the recess DH may have a relatively small curvature. The part of the side surface 12S close to the constriction line LN is a side surface positioned on the side of the constriction line LN with respect to the intermediate point of the line connecting the tips of the thicker end and the thinner end of the egg shape (the longitudinal axis line of the egg shape: the same direction as the X direction) (by contrast, the part of the side surface 12S far away from the constriction line LN is a side surface positioned on the side of the wall portion 13 with respect to the intermediate point of the longitudinal axis line of the egg shape).

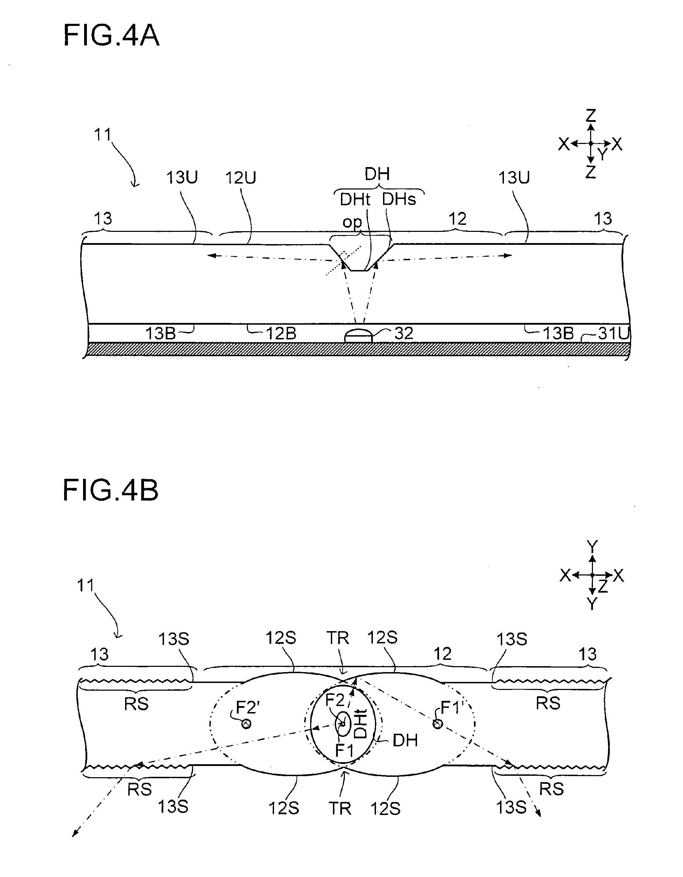

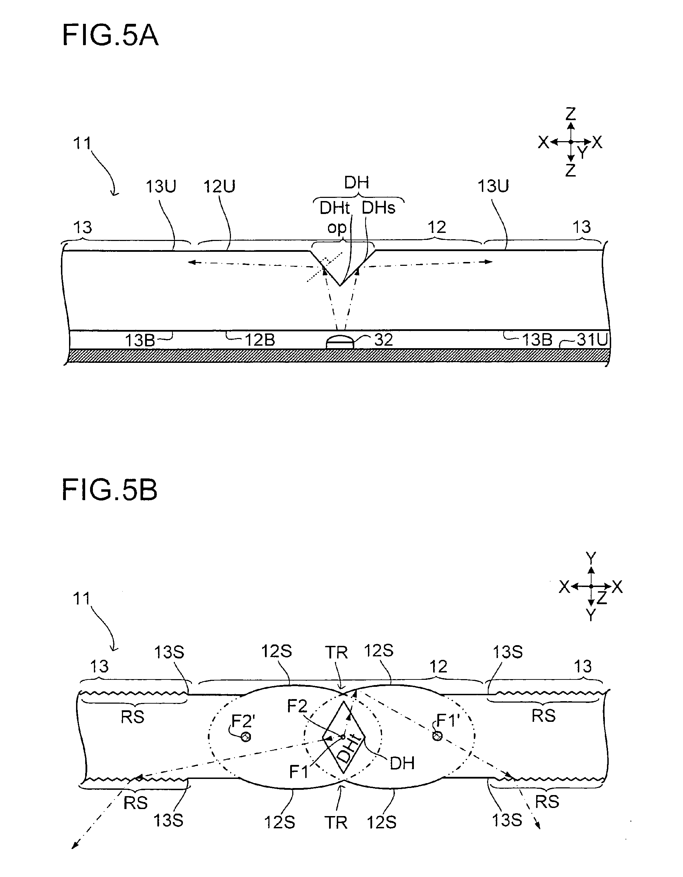

In the above description, as an example of the shape of the recess DH, a conical shape is cited, but the present invention is not limited to this shape. For example, as shown in Figs. 4A and 4B, the recess DH may be circular truncated cone-shaped (the cross-sectional direction shown in Fig. 4A and Fig. 5A to be described later is the same as in Fig. 2A; the cross-sectional direction shown in Fig. 4B and Fig. 5B to be described later is the same as in Fig. 2B). As shown in Figs 5A and 5B, the recess DH may be pyramidal. (The recess DH may also be prismoidal).

In short, the recess DH is preferably shaped such that it tapers, that is, becomes thinner as it is further recessed from the top surface 12U of the tubular portion 12. This is because the surface DHs of the recess DH is inclined to increase the incident angle of the light travelling from the bottom surface 12B and thus a larger amount of light can be totally reflected.

### [Second embodiment]

A second embodiment will be described. In the second embodiment, constituent elements having the same functions as in the first embodiment are identified with the same symbols as in the first embodiment, and the description thereof will not be repeated.

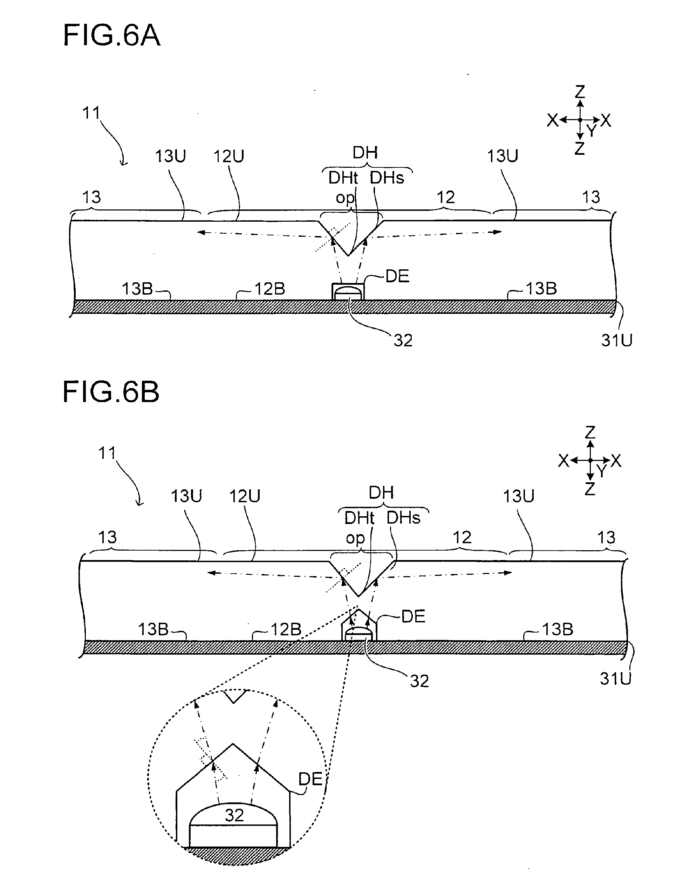

In the first embodiment, the bottom surface 12B of the tubular portion 12 in the light guide member 11 is flat, and the light of the LEDs 32 travels toward the flat surface. This configuration does not limit the present invention. For example, as shown in the cross-sectional view of Fig. 6A (the cross-sectional direction of Fig. 6A is the same as that of Fig. 2A), in order to house the LED 32, an excavation portion DE may be formed that is excavated inward from the bottom surface 12B of the tubular portion 12.

With this configuration, it is possible to easily locate the position of the LED 32 with respect to the light guide member 11 in the process of manufacturing the backlight unit 49. When the LED 32 is housed in the excavation portion DE, the distance between the mounting substrate 31 and the light guide units UT is reduced by the height of the LED 32. Thus, it is possible to easily reduce the thickness of the backlight unit 49 incorporating the mounting substrates 31 having the light guide packages PG thereon.

The excavation portion DE is preferably shaped such that it becomes thinner as it extends inward from the bottom surface 12B of the tubular portion 12. When, for example, as shown in Fig. 6B, the excavation portion DE includes a conical portion, as shown in an enlarged view included in Fig. 6B, the light of the LED 32 passes through the surface DEs of the excavation portion DE, and thus the emission angle becomes smaller than the incident angle, with the result that the light emitted at the emission angle and travelling in that direction reaches the surface DHs of the recess DH (the surface DHs of the recess DH that becomes thinner as it extends inward from the top surface 12U) at a larger incident angle.

When the light reaches the surface DHs as described above, the light is much more likely to be totally reflected off the surface DHs of the recess DH, and thus a large amount of light is more likely to travel to the wall portion 13. Consequently, as in the first embodiment, the light travelling within the wall portion 13 is more likely to travel, through the rough surface RS of the side surface 12S, toward the outside in various directions.

### [Third embodiment]

A third embodiment will be described. In the third embodiment, constituent elements having the same functions as in the first and second embodiments are identified with the same symbols as in the first and second embodiments, and the description thereof will not be repeated.

In the first and second embodiments, the light guide member 11 emits light through the side wall 13S of the wall portion 13 as much as possible. However, since the light travelling within the light guide member 11 travels in various directions, for example, the light does not reach the side wall 13S of the wall portion 13, and can reach the bottom wall 13B and the top wall 13U. Hence, in order to guide, as much as possible, the light described above in a radial direction from the light guide member 11, the light guide member 11 may be configured as described below.

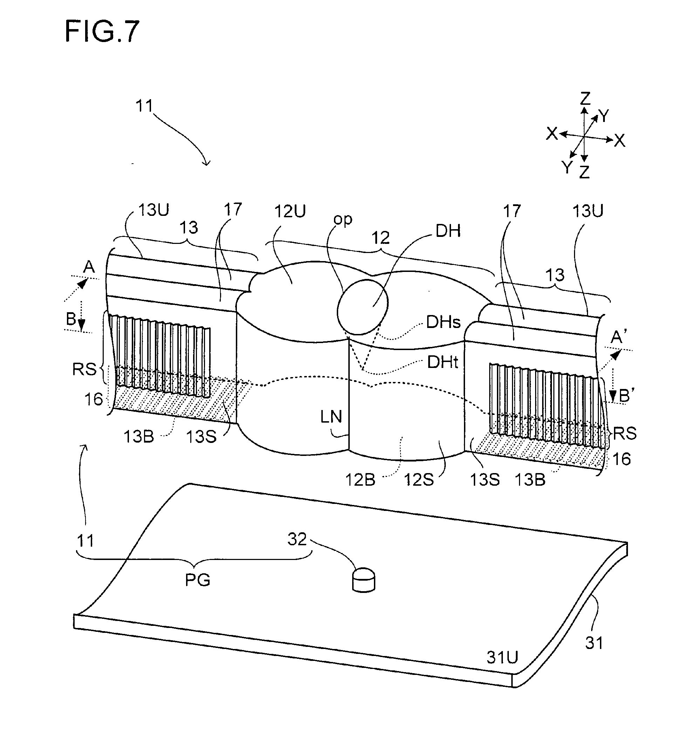

Preferably, as shown in the perspective view of Fig. 7, on the bottom wall 13B of the wall portion 13, a spring-up processed surface 16 that guides the light so as to spring it up is formed, and a lens 17 that diffuses the light is formed on the top wall 13U of the wall portion 13. The spring-up processed surface 16 is formed by aligning, for example, triangular prisms extending (linearly) in one direction, on the bottom wall 13B in the direction in which the wall portion 13 extends (the same direction as the X direction).

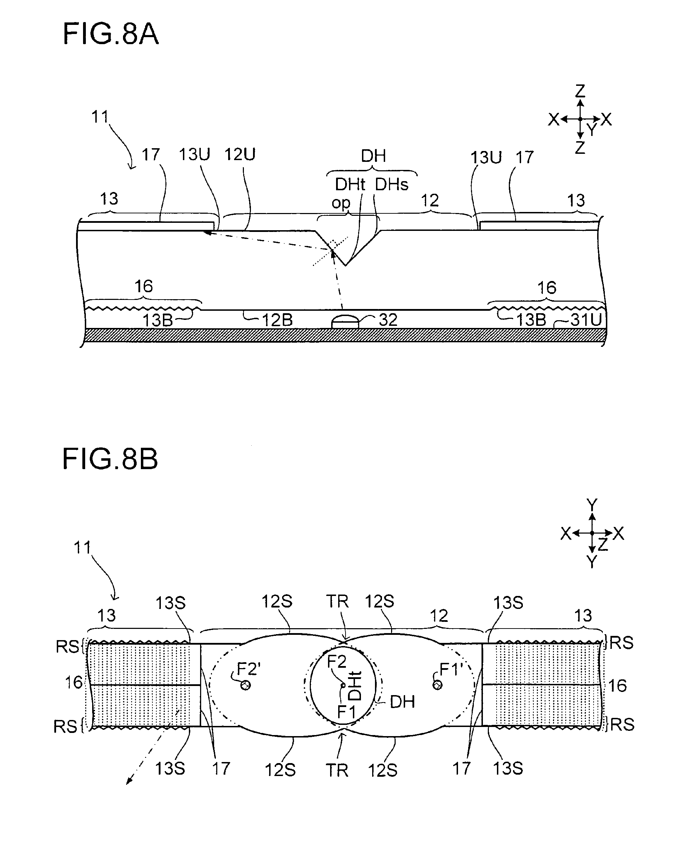

In the light guide member 11 described above, even when, as shown in Fig. 8A (a cross-sectional view taken along line A-A' of the light guide package PG and the mounting substrate 31 shown in Fig. 7 and that is seen in the direction of arrows), the light totally reflected off the surface DHs of the recess DH reaches the top wall 13U without reaching the side wall 13S of the wall portion 13, as shown in Fig. 8B (a cross-sectional view taken along line B-B' of the light guide package PG shown in Fig. 7 and that is seen in the direction of arrows), the curved surface of the lens 17 refracts the received light and makes it travel in various directions. In other words, as in the first and second embodiments, the light from the light guide member 11 is radiated from the light guide member 11.

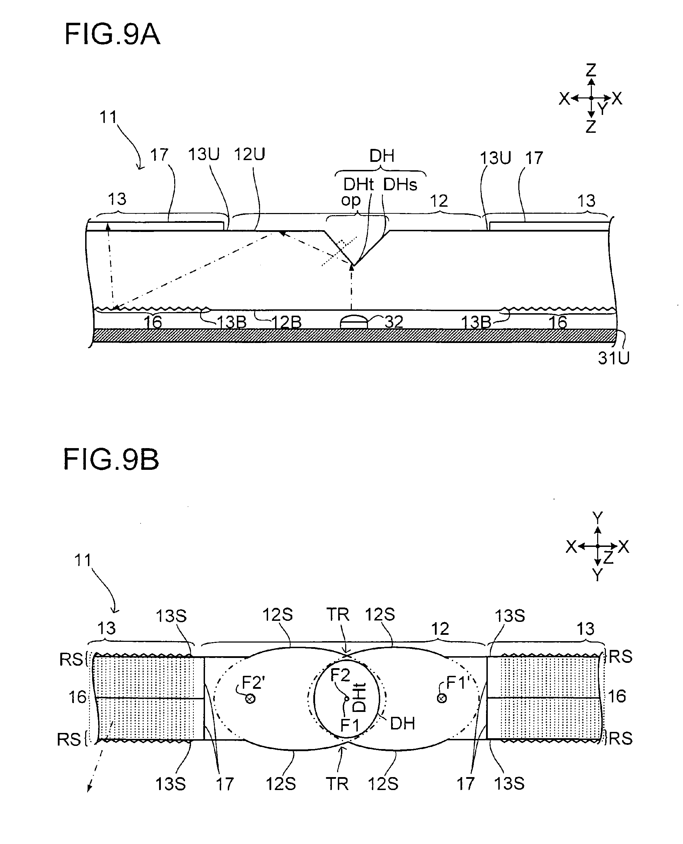

Even when, as shown in Fig. 9A (a cross-sectional view taken along line A-A' of the light guide package PG and the mounting substrate 31 shown in Fig. 7 and that is seen in the direction of arrows), the light totally reflected off the surface DHs of the recess DH reaches the bottom wall 13B without reaching the side wall 13S of the wall portion 13, as shown in Fig. 9B (a cross-sectional view taken along line B-B' of the light guide package PG shown in Fig. 7 and that is seen in the direction of arrows), the spring-up processed surface 16 on the bottom wall 13B guides the light to the top wall 13U. Then, the curved surface of the lens 17 arranged on the top wall 13U refracts the received light and makes it travel in various directions. Consequently, as described above, the light from the light guide member 11 is radiated from the light guide member 11.

### [Other embodiments]

The present invention is not limited to the embodiments described above. Various modifications are possible without departing from the spirit of the present invention.

For example, as the side surface 12S of the tubular portion 12 in the light guide member 11, the examples where the side surface 12S is curved are cited so far, but the side surface 12S is not limited to be curved. The side surface 12S may be flat. In other words, the tubular portion 12 may be prismatic. Preferably, in order to make the light travel in various directions, the side surface 12S of the tubular portion 12 includes at least a curved portion.

As the examples of the rough surface RS formed on the side wall 13S of the wall portion 12 in the light guide member 11 and the spring-up processed surface 16 formed on the bottom wall 13B of the wall portion 13, the prism-processed surface where the triangular prisms are arranged closely to each other has been described; the present invention is not limited to the prism-processed surface. The rough surface RS and the spring-up processed surface 16 may be, for example, a grained surface or a surface on which dot printing processing is performed.

The shape of the lens 17 is not limited to the shape obtained by paralleling the two cylindrical curved surfaces shown in Fig. 7. Another lens shape may be used.

The type of LED (light emitting element) 32 is not particularly limited. As the LED 32, an LED may be used that includes a blue light emitting LED chip (light emitting chip) and a fluorescent member that receives the light from the LED chip and that emits yellow light by fluorescence (the number of chips is not particularly limited). This LED 32 produces white light from the light from the blue light emitting LED chip and the light emitted by fluorescence.

The fluorescent member incorporated in the LED 32 is not limited to the fluorescent member that emits yellow light by fluorescence. The LED 32 may be an LED that includes a blue light emitting LED chip and a fluorescent member which receives the light from the LED chip and which emits green light and red light by fluorescence, and that produces white light from the light from the LED chip and the light (the green light and the red light) emitted by fluorescence.

The LED chip incorporated in the LED 32 is not limited to the blue light emitting LED chip. The LED chip 32 may include a red light emitting LED chip, a blue light emitting LED chip and a fluorescent member that receives the light from the blue LED and that emits green light by fluorescence. This is because the LED 32 described above can produce white light from the red light from the red LED chip, the blue light from the blue LED chip and the green light emitted by fluorescence.

An LED 32 including no fluorescent member may be used. For example, the LED 32 may include a red light emitting LED chip, a green light emitting LED chip and a blue light emitting LED chip and produce white light from the light from all the LED chips.

The light emitted from each of the light guide members 11 is not limited to white light. The light may be red light, green light or blue light. In this case, the light guide members 11 that emit red light, green light and blue light are arranged as close to each other as possible such that it is possible to produce white light by mixing them (for example, the light guide member 11 that emits red light, the light guide member 11 that emits green light and the light guide member 11 that emits blue light are arranged adjacent to each other.)

### List of Reference Symbols

- 11: light guide member
- 12: tubular portion
- 12S: side surface of the tubular portion
- 12B: bottom surface of the tubular portion
- 12U: top surface of the tubular portion
- LN: constriction line
- DH: recess
- 13: wall portion
- 13S: side wall of the wall portion
- 13B: bottom wall of the wall portion
- 13U: top wall of the wall portion
- RS: rough surface (optical path change processed surface)
- 16: spring-up processed surface
- 17: lens
- UT: light guide unit
- 31: mounting substrate
- 32: LED (light source, light emitting element)
- PG: light guide package
- 41: reflective sheet
- 41U: reflective surface
- 42: backlight chassis
- 43: diffusion plate
- 44: prism sheet
- 45: lens sheet
- 49: backlight unit (illumination device)
- 59: liquid crystal display panel (display panel)
- 69: liquid crystal display device (display device)

## Claims

1. A light guide member that guides received light therewithin, the light guide member comprising:
a tubular portion that receives light; and
a wall portion that is connected to the tubular portion and that extends in a direction intersecting a tube axis direction,
wherein the tubular portion includes a recess that tapers inward from a top surface thereof and a constriction line that is recessed inward from a side surface thereof and that is along the tube axis direction, and
the wall portion includes, on a side wall, an optical path change processed surface for changing the light within the light guide member such that an optical path becomes suitable for emission to an outside.

2. The light guide member of claim 1,
wherein an entrance of the recess is shaped such that a longitudinal direction of the entrance faces the constriction line.

3. The light guide member of claim 1,
wherein the recess is conical, pyramidal, circular truncated cone-shaped or prismoidal.

4. The light guide member of claim 1,
wherein the side surface of the tubular portion extending from the constriction line to the wall portion has at least a curved portion.

5. The light guide member of claim 4,
wherein the tubular portion is shaped such that, in a cross section intersecting the tube axis direction, the tubular portion is formed by combining two ellipses, and a focal point of one ellipse coincides with a focal point of the other ellipse.

6. The light guide member of claim 4,
wherein a part of the side surface of the tubular portion extending from the constriction line to the wall portion that is close to the constriction line is greater in curvature than a part thereof that is close to the wall portion.

7. The light guide member of claim 1,
wherein a portion of the tubular portion that receives the light is an excavation portion that is excavated inward from a bottom surface of the tubular portion.

8. The light guide member of claim 7,
wherein the excavation portion tapers inward from the bottom surface.

9. The light guide member of claim 1,
wherein a spring-up processed surface that guides the light so as to spring the light up is formed on a bottom wall of the wall portion, and a lens that diffuses and emits the light is formed on a top wall of the wall portion.

10. A light guide unit,
wherein a plurality of the light guide members of any one of claims 1 to 9 are aligned in a line.

11. A light guide package comprising:
the light guide unit of claim 10; and
a light source that supplies light to the light guide unit.

12. The light guide package of claim 11,
wherein the light source is formed with a light emitting element, and
the light emitting element includes a blue light emitting chip or an ultraviolet light emitting chip and a fluorescent member that receives light from the light emitting chip to emit yellow light by fluorescence.

13. The light guide package of claim 11,
wherein the light source is formed with a light emitting element, and
the light emitting element includes a blue light emitting chip and a fluorescent member that receives light from the light emitting chip to emit green light and red light by fluorescence.

14. The light guide package of claim 11,
wherein the light source is formed with a light emitting element, and
the light emitting element includes a red light emitting chip, a blue light emitting chip and a fluorescent member that receives light from the blue light emitting chip to emit green light by fluorescence.

15. The light guide package of claim 11,
wherein the light source is formed with a light emitting element, and
the light emitting element includes a red light emitting chip, a green light emitting chip and a blue light emitting chip.

16. An illumination device comprising the light guide package of claim 11.

17. A display device comprising:
the illumination device of claim 16; and
a display panel that receives light from the illumination device.
